# EUROPÄISCHE PATENTSCHRIFT

(11) **EP 4 151 078 B1**
(45) Veröffentlichungstag und Bekanntmachung des Hinweises auf die Patenterteilung: **07.08.2024**
(21) Anmeldenummer: 22180932.0
(22) Anmeldetag: 24.06.2022
(51) Int. Cl.: A01F 15/08

(54) **QUADERBALLENPRESSE**
SQUARE BALER
PRESSE À BALLES PARALLÉLÉPIPÈDES

(30) Priorität: 15.09.2021 DE 102021123857
(43) Veröffentlichungstag der Anmeldung: 22.03.2023
(73) Patentinhaber: Usines CLAAS France S.A.S, 57140 St. Rémy / Woippy (FR)
(72) Erfinder: Scharf, Thorsten, 66693 Mettlach (DE); Walter, Thierry, 57050 Longeville-lès-Metz (FR); Schulte, Michael, 33129 Delbrück (DE); Gaucher, Emile, 52170 CHEVILLON (FR)
(74) Vertreter: CLAAS Gruppe

(56) Entgegenhaltungen:
- EP-A1- 0 819 375
- EP-A1- 2 457 432
- DE-A1- 102014 013 325

## Beschreibung

Die vorliegende Erfindung betrifft eine Quaderballenpresse gemäß dem Oberbegriff des unabhängigen Patentanspruchs 1.

Quaderballenpressen werden in der Landwirtschaft dazu eingesetzt beispielsweise im Schwad abgelegtes halmartiges Erntegut wie Stroh, Heu, Gras oder dergleichen aufzunehmen, weiter zu zerkleinern und zu quaderförmigen Ballen zu verdichten bzw. zu pressen. Hierzu verfügen die Quaderballenpressen über verschiedene Arbeitsaggregate, die der erforderlichen Förderung und/oder Weiterverarbeitung des Ernteguts dienen. Derartige Arbeitsaggregate sind beispielsweise ein Schneidrotor zum Zerkleinern des aufgesammelten Ernteguts, ein Raffer zum Vorverdichten und Zuführen des vom Schneidrotor zerkleinerten Ernteguts in einen Presskanal der Quaderballenpresse, ein Presskolben, der in dem Presskanal beweglich angeordnet ist und das in dem Presskanal befindliche und vorverdichtete Erntegut zu einem Quaderballen presst, sowie ein Knoter, der den gepressten Ballen bindet. Diese Arbeitsaggregate stehen üblicherweise mit einem zentralen Antriebsstrang der Quaderballenpresse in Antriebsverbindung, der im Betrieb der Quaderballenpresse mit einer Zapfwelle einer landwirtschaftlichen Arbeitsmaschine, insbesondere eines Traktors, verbunden ist.

Die DE 10 2014 013 325 A1 betrifft beispielsweise eine solche gattungsgemäße Quaderballenpresse. Die aus der DE 10 2014 013 325 A1 bekannte Quaderballenpresse umfasst einen in einem Presskanal oszillierend beweglichen Presskolben und zumindest ein weiteres Arbeitsaggregat. Der Presskolben und das Arbeitsaggregat sind über einen gemeinsamen Antriebsstrang angetrieben, der einen Drehmomenteneingangsanschluss, eine Leistungsverzweigung und ein den Presskolben antreibendes Untersetzungsgetriebe umfasst. Sowohl die Leistungsverzweigung als auch das den Presskolben antreibende Untersetzungsgetriebe umfassen eine Kegelradstufe, wobei Kegelräder beider Stufen auf einer gleichen Welle angeordnet sind. Das den Presskolben antreibende Untersetzungsgetriebe und das eine Arbeitsaggregat sind parallel zueinander an die Leistungsverzweigung angeschlossen. An einem Wellenabschnitt, der den Drehmomenteneingangsanschluss des Antriebsstrangs mit der Leistungsverzweigung verbindet, ist ein Schwungrad angeordnet.

Eine solche Ausgestaltung des Antriebsstrangs erlaubt zwar den parallelen Antrieb von mehreren Arbeitsaggregaten der Quaderballenpresse, muss jedoch, sofern sich die Anordnung der Arbeitsaggregate, die Dimensionierung der Arbeitsaggregate und/oder die von den Arbeitsaggregaten benötigte Antriebsleistung ändert, in aller Regel vollständig neu ausgelegt werden. Ferner muss das Schwungrad bei einem solchen Antriebsstrang relativ groß ausfallen, um das Antriebsaggregat einer an die Quaderballenpresse angeschlossenen landwirtschaftlichen Arbeitsmaschine von Drehmomentenstößen des Presskolbens oder der Arbeitsaggregate abzuschirmen und Drehzahlschwankungen des Antriebsstrangs zu verringern.

So muss beispielsweise, sofern eine Antriebsleistung des Presskolbens erhöht werden soll, die Konzeptionierung des Antriebsstrangs, insbesondere der Getriebebauteile, grundlegend abgeändert oder überarbeitet werden. Eine derartige konstruktive Umgestaltung des Antriebsstrangs im Hinblick auf unterschiedliche Leistungsbedarfe des Presskolbens resultiert in einer Erhöhung des Gewichts der Quaderballenpresse, was sich nachteilig auf die Effizienz eines landwirtschaftlichen Zugs, bestehend aus landwirtschaftlicher Arbeitsmaschine und angekoppelter Quaderballenpresse, im Betrieb und eine durch den landwirtschaftlichen Zug auf den Boden wirkende Last auswirkt. Ferner kann sich eine derartige konstruktive Umgestaltung im Hinblick auf bestehende Bauraumrestriktionen der Quaderballenpresse als schwierig in der Umsetzung erweisen.

Abgesehen hiervon, ist ein solcher Antriebsstrang bzw. ein solches Antriebsstrangkonzept nicht, wenn überhaupt nur bedingt, für einen modularen Aufbau geeignet. Obwohl sich das Antriebsprinzip der Arbeitsaggregate einer Quaderballenpresse an und für sich nicht ändert, ist somit in aller Regel für verschiedene Leistungsklassen oder Baugrößen einer Modellreihe einer Quaderballenpresse ein jeweils eigens ausgelegter und dimensionierter Antriebsstrang notwendig. Dies steht einer wirtschaftlichen Herstellung und einem wirtschaftlichen Einsatz einer Quaderballenpresse entgegen.

Ausgehend von dem vorstehend genannten Stand der Technik ist es demnach die Aufgabe der vorliegenden Erfindung, eine Quaderballenpresse anzugeben, die die an den Antriebsaggregaten der Quaderballenpresse erforderlichen Antriebsleistung, insbesondere die Antriebsleistung des Presskolbens, zuverlässig bereitstellt, sich gleichzeitig jedoch durch einen vereinfachten und modularen Aufbau und ein geringeres Gewicht auszeichnet.

Diese Aufgabe wird erfindungsgemäß durch die Merkmale des unabhängigen Patentanspruchs 1 gelöst, wobei vorteilhafte Weiterbildungen der erfindungsgemäßen Quaderballenpresse Gegenstand der entsprechenden abhängigen Patentansprüche 2 bis 15 sind.

Demnach betrifft die vorliegende Erfindung eine Quaderballenpresse, die zumindest einen in einem Presskanal zwischen Endlagen beweglich angeordneten Presskolben und einen Schneidrotor umfasst. Die Quaderballenpresse umfasst ferner einen Antriebsstrang, der dazu ausgebildet ist, zumindest den Presskolben und den Schneidrotor gemeinsam anzutreiben. Der Antriebsstrang umfasst einen Drehmomenteneingangsanschluss mittels dem ein Drehmoment dem Antriebsstrang zuführbar ist, eine erste Leistungsverzweigung, vorzugsweise eine Kegelradstufe, die mit dem Drehmomenteneingangsanschluss verbunden ist, und zumindest ein dem Presskolben zugeordnetes Untersetzungsgetriebe. Das dem Presskolben zugeordnete Untersetzungsgetriebe und der Schneidrotor sind parallel zueinander an die erste Leistungsverzweigung angeschlossen. Die Quaderballenpresse ist dadurch gekennzeichnet, dass der ersten Leistungsverzweigung und dem zumindest einen dem Presskolben zugeordneten Untersetzungsgetriebe zumindest ein Seitengetriebe und dem zumindest einen dem Presskolben zugeordneten Untersetzungsgetriebe und dem zumindest einen Seitengetriebe zumindest ein Schwungrad zwischengeschaltet ist.

Das Antriebsstrangkonzept der erfindungsgemäßen Quaderballenpresse, insbesondere die Ausführung des Antriebsstrangs zwischen Leistungsverzweigung und Presskolben, erlaubt es, einerseits das für den Betrieb des Presskolbens erforderliche hohe Drehmoment bei geringer Drehzahl bereitzustellen und zeichnet sich andererseits durch einen sehr einfache, aber widerstandsfähigen Aufbau aus. Die Kombination aus Seitengetriebe und nachgeschaltetem Schwungrad erlaubt es, das Schwungrad kleiner zu dimensionieren als bei herkömmlichen aus dem Stand der Technik bekannten Antriebssträngen. Die von dem Schwungrad zu erfüllenden Aufgaben, wie das Abschirmen von Drehmomentenstößen des Presskolbens oder der Arbeitsaggregate und das Verringern von Drehzahlschwankungen des Antriebsstrangs, werden jedoch in gleichem Maße wirksam erfüllt. Ein weiterer aus dieser Anordnung resultierender Vorteil ist darin zu sehen, dass eine Kupplung zwischen Drehmomenteneingangsanschluss und Leistungsverzweigung entfallen kann. Das Schwungrad wird im Betrieb der Quaderballenpresse demnach fortwährend angetrieben und der Presskolben bei Bedarf, insbesondere sobald das Schwungrad seine Betriebsdrehzahl erreicht hat, zugeschaltet.

Eine mittels des zumindest einen Seitengetriebes erzielte Entkopplung von erster Leistungsverzweigung und dem zumindest einem Untersetzungsgetriebe sorgt ferner für einen modularen Aufbau des Antriebsstrangs, so dass dieser durch einen Austausch von einzelnen Baugruppen des Antriebsstrangs unkompliziert im Hinblick auf verschiedene Leistungsklassen und Baugrößen von Quaderballenpressen angepasst werden kann, ohne dass Antriebsstrangkonzept bzw. -layout grundlegend anpassen zu müssen.

Ein weiterer Vorteil der erfindungsgemäßen Ausgestaltung zwischen erster Leistungsverzweigung und Untersetzungsgetriebe ist darin zu sehen, dass das Gewicht des Antriebsstrangs in erheblichen Maße reduziert werden kann, da auf eine komplexe, zentral in der Quaderballenpresse gelegene Abfolgen von Getrieben verzichtet werden kann.

Eine Anordnung von zumindest einem Seitengetriebe zwischen erster Leistungsverzweigung und dem Untersetzungsgetriebe erlaubt es, eine zwischen Leistungsverzweigung und Presskolben vorhandene räumliche Distanz besonders einfach zu überbrücken, ohne dass im Zentrum der Quaderballenpresse zwischen erster Leistungsverzweigung und Presskolben Antriebsstrangkomponenten angeordnet sind, die einem Aufbau der Quaderballenpresse entgegenstehende Bauraumrestriktionen schaffen.

Gemäß einer weiteren vorteilhaften Weiterbildung der Erfindung ist vorgesehen, dass ein Abtrieb des zumindest einen Seitengetriebes das zumindest eine Schwungrad umfasst.

Diese Ausgestaltung erlaubt es, den Antriebsstrang relativ unkompliziert im Hinblick auf verschiedene Dimensionierungen des Presskolbens und damit einhergehende im Betrieb wirkende Lasten und erforderliche Antriebsleistungen anzupassen, indem lediglich der Abtrieb des zumindest einen Seitengetriebes ausgetauscht werden kann und nicht das ganze Seitengetriebe ausgetauscht werden muss. Eine derartige Ausgestaltung vereinfacht zudem notwendige Wartungsarbeiten am Antriebsstrang und die Zugänglichkeit zu Baugruppen des Antriebsstrangs, beispielsweise dem Untersetzungsgetriebe, die dem zumindest einen Seitengetriebe nachgeschaltet sind.

Gemäß einer weiteren vorteilhaften Weiterbildung der Erfindung ist vorgesehen, dass das Übersetzungsverhältnis des zumindest einen Seitengetriebes i < 1 beträgt.

Hierdurch wird die mittels einer Zapfwelle der landwirtschaftlichen Arbeitsmaschine am Drehmomenteneingangsanschluss bereitgestellte Drehzahl durch das zumindest eine Seitengetriebe erhöht, was im Hinblick auf die spezielle Anordnung und Ausgestaltung des Schwungrads als besonders vorteilhaft anzusehen ist. Eine Kupplung zwischen Drehmomenteneingangsanschluss und erster Leistungsverzweigung kann somit entfallen, ohne dass die Gefahr besteht, dass bei einer Inbetriebnahme der Quaderballenpresse durch die landwirtschaftliche Arbeitsmaschine oder bei anderen Betriebssituationen das Antriebsaggregat der landwirtschaftlichen Arbeitsmaschine abgewürgt wird.

Gemäß einer weiteren vorteilhaften Weiterbildung der Erfindung ist vorgesehen, dass das zumindest eine Seitengetriebe ein Zugmittelgetriebe, vorzugsweise ein Keilriemengetriebe, ist.

Die Ausgestaltung des zumindest einen Seitengetriebes als Zugmittelgetriebe ermöglicht es, in dem zumindest einen dem Presskolben zugeordneten Untersetzungsgetriebe während des Betriebs der Quaderballenpresse durch eine mittels des Presskolbens im Betrieb erzeugte Last wirkende Verwindung (Torsion) auszugleichen bzw. eine solche Verwindung nicht auf andere Baugruppen des Antriebsstrangs zu übertragen, da dies zu einer Beschädigung oder Zerstörung der Baugruppen führen könnte.

Die Verwendung eines Keilriemengetriebes ist in diesem Zusammenhang als besonders vorteilhaft anzusehen, da hierdurch die Kosten des Antriebsstrangs gering gehalten werden können. Kettengetriebe sind jedoch im Hinblick auf den Zweck gleichermaßen einzusetzen. Auch ist es vorstellbar das zumindest eine Seitengetriebe als Kegelradstufe auszubilden, wobei ein mit einer Abtriebswelle der ersten Leistungsverzweigung in Wirkverbindung stehendes Kegelrad der Kegelradstufe mittels einer Gelenkwelle mit einem zweiten Kegelrad verbunden ist, das wiederum das zumindest eine Schwungrad antreibt.

Gemäß einer weiteren vorteilhaften Weiterbildung der Erfindung ist vorgesehen, dass der Antriebsstrang genau zwei dem Presskolben zugeordnete Untersetzungsgetriebe und genau zwei der ersten Leistungsverzweigung und den dem Presskolben zugeordneten Untersetzungsgetrieben zwischengeschaltete Seitengetriebe umfasst.

Insbesondere ist in diesem Zusammenhang vorgesehen, dass der Antriebsstrang zwei Schwungräder umfasst und ein Schwungrad jeweils einem dem Presskolben zugeordneten Untersetzungsgetriebe und einem zugehörigen Seitengetriebe zwischengeschaltet ist.

Eine Ausführungsform des Antriebsstrangs mit jeweils zwei Untersetzungsgetrieben, zwei Seitengetrieben und vorzugsweise zwei Schwungrädern insbesondere für Quaderballenpressen, die ein sehr hohes Drehmoment am Presskolben erfordern und/oder einen größer dimensionierten Presskolben antreiben müssen, als besonders vorteilhaft anzusehen. Die Ausgestaltung des Antriebsstrangs mit zwei Seitengetrieben, zwei Untersetzungsgetrieben und vorzugsweise zwei Schwungrädern, die eine in Querrichtung der Quaderballenpresse zentral angeordnete Kurbelwelle, auf der der Presskolben gelagert ist, rechts- und linksseitig umgeben, reduziert die Belastung auf die einzelnen Baugruppen des Antriebsstrangs, indem eine homogene Aufnahme der durch den Presskolben auf den Antriebsstrang wirkenden Last erzielt wird. Gleichzeitig kann die notwendige Antriebsleistung zuverlässig bereitgestellt werden, wobei auch hier durch die Aufteilung auf zwei Seitengetriebe und zwei Untersetzungsgetriebe eine Belastung der einzelnen Baugruppen des Antriebsstrangs auf das erforderliche Maß reduziert wird.

Vorzugsweise ist es vorgesehen, dass ein Abtrieb jeweils eines Seitengetriebes jeweils ein Schwungrad umfasst.

Wie bereits zuvor beschrieben, erlaubt diese Ausgestaltung der Abtriebe, den Antriebsstrang relativ unkompliziert im Hinblick auf verschiedene Dimensionierungen des Presskolbens und damit einhergehende im Betrieb wirkender Lasten und erforderlicher Antriebsleistungen anzupassen, indem lediglich der jeweilige Abtrieb des Seitengetriebes ausgetauscht werden kann und nicht jeweils das ganze Seitengetriebe ausgetauscht werden muss. Eine derartige Ausgestaltung vereinfacht ebenfalls notwendige Wartungsarbeiten am Antriebsstrang und steigert die Zugänglichkeit zu Baugruppen des Antriebsstrangs, beispielsweise den Untersetzungsgetrieben, die den Seitengetrieben nachgeschaltet sind.

Gemäß einer vorteilhaften Weiterbildung der Erfindung ist vorgesehen, dass der Antriebsstrang ein dem Schneidrotor zugeordnetes Untersetzungsgetriebe umfasst und der ersten Leistungsverzweigung und dem dem Schneidrotor zugeordneten Untersetzungsgetriebe ein Seitengetriebe oder ein Winkelgetriebe zwischengeschaltet ist.

Hierdurch kann in besonders vorteilhafter Art und Weise der Schneidrotor parallel zum Presskolben angetrieben werden, wobei die entsprechenden in Bezug auf den Presskolbenantrieb bereits genannten Vorteile durch die Verwendung des zwischen der ersten Leistungsverzweigung und dem einen dem Schneidrotor zugeordneten Untersetzungsgetriebe zwischengeschalteten Seitengetriebe oder Winkelgetriebe erzielt werden.

Gemäß einer weiteren vorteilhaften Weiterbildung der Erfindung ist vorgesehen, dass das Übersetzungsverhältnis des Seitengetriebes oder Winkelgetriebes i = 1 beträgt.

Durch die Wahl des Übersetzungsverhältnisses i = 1 kann dem Untersetzungsgetriebe des Schneidrotors eine optimale Antriebsleistung zur Verfügung gestellt werden, die anschließend von dem Untersetzungsgetriebe auf die für den Betrieb des Schneidrotors erforderliche Antriebsleistung umgewandelt wird. Da die für den Betrieb des Schneidrotors erforderliche Antriebsleistung anders ausfällt als die für den Betrieb des Presskolbens erforderliche Antriebsleistung, unterscheidet sich das Übersetzungsverhältnis des die Antriebsleistung für den Schneidrotor zuführenden Seitengetriebes oder Winkelgetriebes von dem des die Antriebsleistung für den Presskolben zuführenden Seitengetriebes. Gemäß einer alternativen Weiterbildung kann das Übersetzungsverhältnis des Seitengetriebes oder Winkelgetriebes allerdings auch i # 1 betragen.

Weiterhin ist erfindungsgemäß vorgesehen, dass das Seitengetriebe ein Zugmittelgetriebe oder ein Stirnradgetriebe ist, oder das Winkelgetriebe eine Kegelradstufe ist.

Insbesondere ist das als Zugmittelgetriebe ausgebildete Seitengetriebe ein Keilrippenriemengetriebe.

Auch hier ergeben sich gleichermaßen die Vorteile, wie sie sich bei der Wahl des Seitengetriebes zwischen erster Leistungsverzweigung und Untersetzungsgetriebe des Presskolbens ergeben. Vorzugsweise ist das Seitengetriebe als Zugmittelgetriebe ausgebildet. Die Wahl einer geeigneten Ausgestaltung des Seitengetriebes kann im Hinblick auf die in der Quaderballenpresse vorliegenden Bauraumrestriktionen erfolgen.

Gemäß einer weiteren vorteilhaften Weiterbildung der Erfindung ist vorgesehen, dass das dem Schneidrotor zugeordnete Untersetzungsgetriebe ein mehrstufiges Stirnradgetriebe ist.

Die Verwendung eines mehrstufigen Stirnradgetriebes erlaubt die von dem Seitengetriebe bereitgestellte Antriebsleistung auf die für den Betrieb des Schneidrotors erforderliche Antriebsleistung zu wandeln. Gleichzeitig wird ein Getriebeaufbaugeschaffen, der sich durch eine geringe Erstreckung in Querrichtung der Ballenpresse auszeichnet, somit unkompliziert in einem Randbereich des Schneidrotors angeordnet werden kann, ohne hierbei einer Anordnung der Komponenten der Aufnahmevorrichtung, wie Pick-Up, etc., und/oder deren Antrieben im Wege zu stehen.

Gemäß einer weiteren vorteilhaften Weiterbildung der Erfindung ist vorgesehen, dass das Planetengetriebe ein einstufiges Planetengetriebe ist. Ein Sonnenrad des Planetengetriebes mittels des Seitengetriebes oder Winkelgetriebes antreibbar ist. Die Planetenträger des Planetengetriebes sind mit dem Schneidrotor verbunden und das Planetengetriebe ist zum Abtrieb über die Planetenträger ausgebildet.

Die Ausgestaltung des Seitengetriebes als einstufiges Planetengetriebe erlaubt in gleichem Maße wie die Ausgestaltung als Stirnradgetriebe die bereitgestellte Leistung auf die für den Antrieb des Schneidrotors erforderliche Leistung zu wandeln. Die Verwendung eines Planetengetriebes zeichnet sich im Gegensatz zu einem Stirnradgetriebe dadurch aus, dass die Leistung nicht nur über jeweils einen Zahn eines Getriebezahnrads übertragen wird, sondern gleichzeitig über einen Zahn eines jeden Planetenrads. Hierdurch wird die Belastung auf die das Untersetzungsgetriebe ausbildenden Getriebekomponenten im Vergleich zu einer Ausgestaltung als Stirnradgetriebe erheblich reduziert. Auch ein Planetengetriebe zeichnet sich in gleichem Maße durch einen kompakten und bauraumsparenden Aufbau aus.

Gemäß einer weiteren vorteilhaften Weiterbildung der Erfindung ist vorgesehen, dass dem zumindest einen Seitengetriebe eine zweite Leistungsverzweigung nachgeschaltet ist, die dazu ausgebildet ist, zumindest ein weiteres Arbeitsaggregat der Quaderballenpresse parallel zu dem Presskolben und dem Schneidrotor zu betreiben.

Vorzugsweise ist hierbei vorgesehen, dass die zweite Leistungsverzweigung ein mehrstufiges Stirnradgetriebe umfasst.

Durch die Ausbildung einer zweiten Leistungsverzweigung kann parallel zu dem Presskolben und dem Schneidrotor zumindest noch ein weiteres Antriebsaggregat der Quaderballenpresse, beispielsweise ein Knoter oder ein Raffer, angetrieben werden. Die Ausgestaltung in Form eines mehrstufigen Stirnradgetriebes sorgt dafür, dass eine räumliche Distanz zwischen Presskolbenantrieb und dem zumindest einen weiteren Arbeitsaggregat unkompliziert, aber zuverlässig, übertragen werden und die Antriebsleistung hierbei im Hinblick auf eine für den Betrieb des zumindest einen weiteren Arbeitsaggregats erforderliche Antriebsleistung bereits (vor-)übersetzt werden kann.

Gemäß einer weiteren vorteilhaften Weiterbildung der Erfindung ist vorgesehen, dass die zweite Leistungsverzweigung dem zumindest einen dem Presskolben zugeordneten Untersetzungsgetriebe zugeordnet ist.

Gemäß einer weiteren vorteilhaften Weiterbildung der Erfindung ist vorgesehen, dass, wenn der Antriebsstrang zwei dem Presskolben zugeordnete Untersetzungsgetriebe umfasst, die zweite Leistungsverzweigung einem der zwei dem Presskolben zugeordneten Untersetzungsgetriebe zugeordnet ist.

Die Zuordnung der zweiten Leistungsverzweigung zu dem zumindest einen Untersetzungsgetriebes dient ebenfalls dem Zweck den Aufbau des Antriebsstrangs zu vereinfachen und Gewicht zu sparen, da auf bestehende und erforderliche Getriebestrukturen zurückgegriffen werden kann, um die Leistung an weitere Arbeitsaggregate zu verteilten. Ferner wird kein weiterer Bauraum im Bereich zwischen zumindest einem Seitengetriebe und Kurbelwelle des Presskolbens benötigt, um die Leistungsverzweigung auszubilden.

Gemäß einer weiteren vorteilhaften Weiterbildung der Erfindung ist vorgesehen, dass der zweiten Leistungsverzweigung eine dritte Leistungsverzweigung nachgeschaltet ist, die dazu ausgebildet ist, zwei weitere Arbeitsaggregate der Quaderballenpresse parallel zu dem Presskolben und dem Schneidrotor zu betreiben.

Vorzugsweise ist hierbei vorgesehen, dass die dritte Leistungsverzweigung eine Kegelradstufe umfasst.

Durch die Ausbildung einer dritten Leistungsverzweigung können parallel zu dem Presskolben und dem Schneidrotor zwei weitere Antriebsaggregate der Quaderballenpresse, beispielsweise Raffer und Knoter, angetrieben werden. Es wird somit ein intelligentes Antriebsstrangkonzept geschaffen, dass einen parallelen und abgestimmten Antrieb mehrerer Antriebsaggregate der Quaderballenpresse ermöglich, die durch ein geringeres Gewicht und einen hohen Grad an Modularität gekennzeichnet ist.

Die vorliegende Erfindung wird nachstehend anhand der in den Figuren abgebildeten Ausführungsformen näher beschrieben.

Es zeigen:
- Fig. 1:: eine schematische und exemplarische Seitenansicht einer erfindungsgemäßen Quaderballenpresse;
- Fig. 2:: eine schematische und exemplarische Darstellung einer ersten Ausführungsform eines Antriebsstrangs der erfindungsgemäßen Quaderballenpresse gemäß FIG. 1; und
- Fig. 3:: eine schematische und exemplarische Darstellung einer zweiten Ausführungsform des Antriebsstrangs der erfindungsgemäßen Quaderballenpresse gemäß FIG. 1.

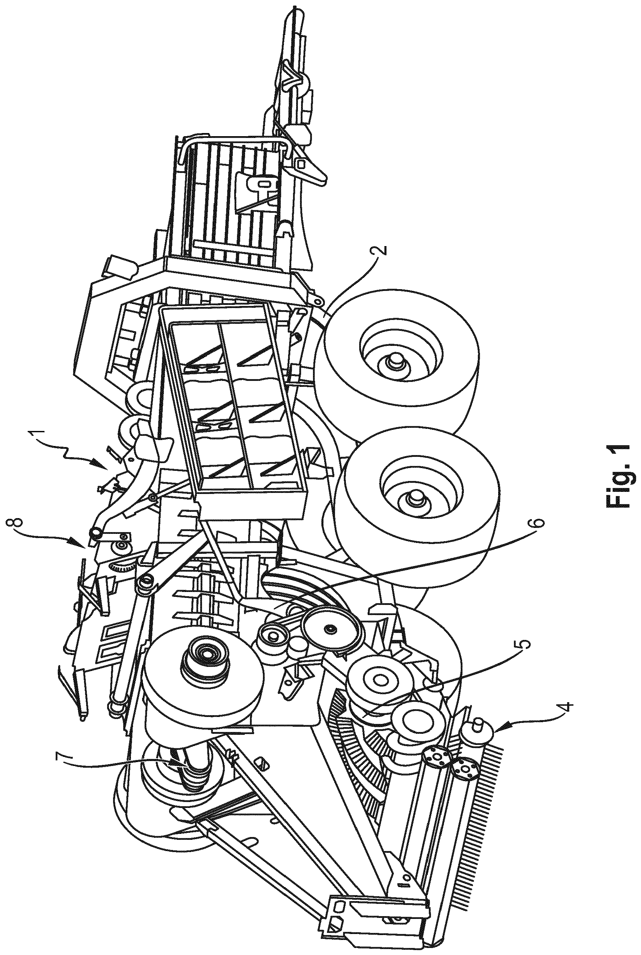

FIG. 1 zeigt eine schematische und exemplarische Darstellung einer Ausführungsform der erfindungsgemäßen Quaderballenpresse 1. Die Quaderballenpresse 1 ist mit einer in den FIGs. nicht dargestellten landwirtschaftlichen Arbeitsmaschine, insbesondere eines Traktors, koppelbar, so dass die Quaderballenpresse 1 und die landwirtschaftliche Arbeitsmaschine gemeinsam einen sogenannten landwirtschaftlichen Zug ausbilden. Die Quaderballenpresse 1 umfasst ein in FIG. 1 nicht dargestelltes Gehäuse auf, welches die an einem Fahrgestell 2 der Quaderballenpresse 1 befestigte Komponenten der Quaderballenpresse 1 umhüllend umgibt.

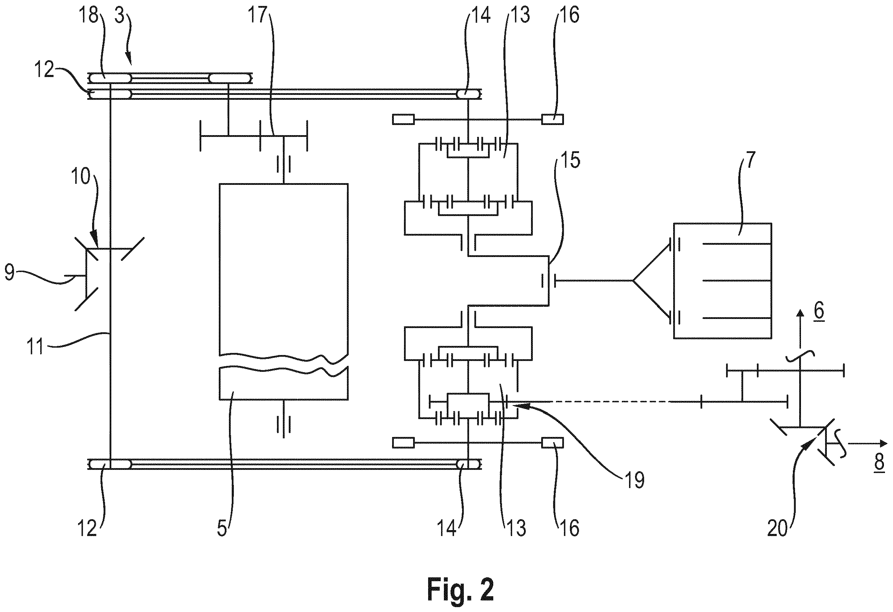

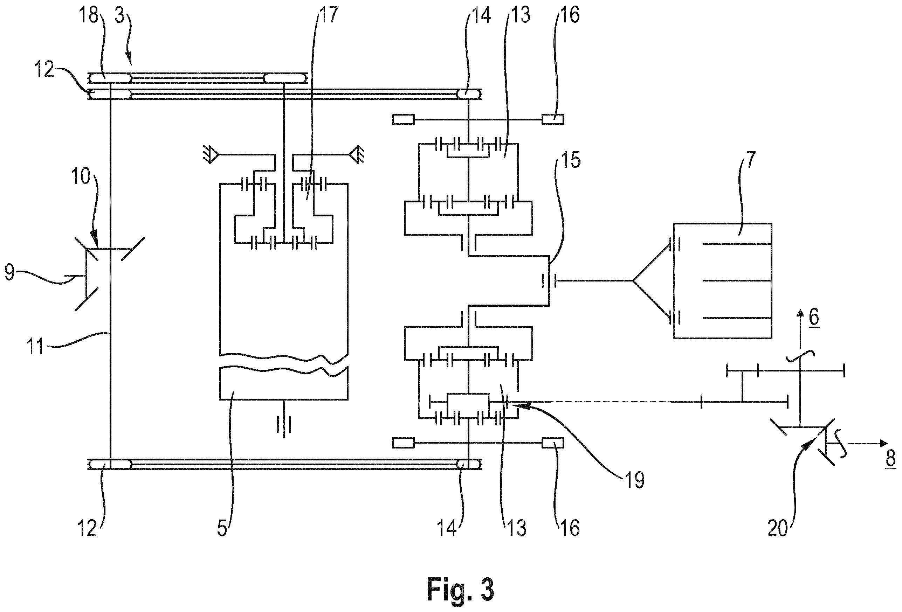

Die Quaderballenpresse 1 umfasst ferner einen in den FIGs. 2 und 3 näher dargestellten Antriebsstrang 3 mittels dem diverse Arbeitsaggregate der Quaderballenpresse 1 angetrieben werden. Derartige Arbeitsaggregate sind beispielsweise eine als Pick-Up bekannte Aufnahmevorrichtung 4 zur Aufnahme von im Schwad auf einer landwirtschaftlichen Fläche abgelegten Ernteguts, ein Schneidrotor 5 zum Zerkleinern des aufgenommenen Ernteguts, ein Raffer 6 zum Vorverdichten des zerkleinerten Ernteguts und Zuführen desselben in einen Presskanal der Quaderballenpresse 1, ein in dem Presskanal der Quaderballenpresse 1 zwischen Endlagen beweglich angeordneten Presskolben 7 zum Pressen des vorverdichteten Ernteguts in einen Quaderballen, sowie ein Knoter 8 zum Binden des gepressten Quaderballens.

Der Antriebsstrang 3 der Quaderballenpresse 1 wird mittels der landwirtschaftlichen Arbeitsmaschine, insbesondere des Traktors, mit einer Antriebsleistung versorgt. Hierzu umfasst die landwirtschaftliche Arbeitsmaschine heckseitig einen an sich bekannten Zapfwellenabtrieb auf. Der Antriebsstrang 3 der Quaderballenpresse 1 umfasst eine Antriebswelle 9, die wiederum einen Drehmomenteneingangsanschluss des Antriebsstrangs 3 umfasst mittels dem der Antriebsstrang 3 der Quaderballenpresse 1 mit dem Zapfwellenabtrieb der landwirtschaftlichen Arbeitsmaschine verbindbar ist.

An die Antriebswelle 9 des Antriebsstrangs 3 schließt sich eine erste Leistungsverzweigung 10 an, die als Kegelradstufe ausgebildet ist. Ein Kegelrad der als Kegelradstufe ausgebildeten ersten Leistungsverzweigung umfasst eine Abtriebswelle 11, die sich quer zur Antriebswelle 9 (d.h., quer zur Haupterstreckungsrichtung der Quaderballenpresse 1 (also quer zu einer Längsrichtung der Quaderballenpresse 1)) erstreckt, an der das andere Kegelrad der Kegelradstufe angeschlossen ist.

Vorzugsweise beträgt ein Übersetzungsverhältnis der ersten Leistungsverzweigung 10 i < 1, so dass die Drehzahl der Abtriebswelle 11 höher ist als die Drehzahl der Antriebswelle 9.

Auf der Antriebswelle 9 kann, vorzugsweise unmittelbar vor der ersten Leistungsverzweigung 10, ein Stirnrad angeordnet sein, dass dazu eingerichtet ist, eine hydraulische Pumpe anzutreiben, die Komponenten des Antriebsstrangs 3 und/oder der Quaderballenpresse 1 mit einem hydraulischen Fluid versorgen kann.

Auf der Abtriebswelle 11 der ersten Leistungsverzweigung 10 ist zumindest ein Seitengetriebe 12, genauer gesagt der Antrieb zumindest eines Seitengetriebes 12, angeordnet. Das zumindest eine Seitengetriebe 12 überträgt die mittels der ersten Leistungsverzweigung 10 verzweigte Antriebsleistung zum Presskolbenantrieb. Das zumindest eine Seitengetriebe 12 ist vorzugsweise als Zugmittelgetriebe, besonders bevorzugt als Keilriemengetriebe, ausgebildet, kann jedoch auch als ein anderes Zugmittelgetriebe, beispielsweise ein Kettengetriebe, oder aber auch als Kegelradstufe ausgebildet sein. Sofern das zumindest eine Seitengetriebe 12 als Kegelradstufe ausgebildet ist, umfasst die Kegelradstufe zwei mittels einer Gelenkwelle miteinander verbundene Kegelräder.

Das Übersetzungsverhältnis des zumindest einen Seitengetriebes 12 beträgt vorzugsweise i < 1. Andere Übersetzungsverhältnisse sind jedoch ebenfalls vorstellbar. Ein Übersetzungsverhältnis von i < 1 ist jedoch im Hinblick auf die erfindungsgemäße Anordnung eines Schwungrads 10, die im Folgenden noch im Detail beschrieben wird, als besonders vorteilhaft anzusehen.

Wie in den FIGs. 2 bis 3 dargestellt, können auf der Abtriebswelle 11 auch zwei solcher Seitengetriebe 12 bzw. die Antriebe zweier solcher Seitengetriebe 12 angeordnet sein. Sofern zwei solcher Seitengetriebe 12 vorhanden sind, sind diese Seitengetriebe 12 bzw. die Antriebe dieser Seitengetriebe 12 voneinander beabstandet in Querrichtung zur Antriebswelle 9 (d.h., quer zur Haupterstreckungsrichtung der Quaderballenpresse 1 (also quer zu einer Längsrichtung der Quaderballenpresse 1)) die erste Leistungsverzweigung 10 beidseitig umgebend auf der Abtriebswelle 11, insbesondere in deren Endbereichen, angeordnet.

Der Antriebsstrang 3 umfasst ferner zumindest ein dem Presskolben 7 zugeordnetes Untersetzungsgetriebe 13, dem die von dem zumindest einen Seitengetriebe 12 übertragene Antriebsleistung, genauer gesagt über einen Abtrieb 14 des zumindest einen Seitengetriebes 12, zugeführt wird. Mit anderen Worten, der ersten Leistungsverzweigung 10 und dem zumindest einen dem Presskolben 7 zugeordneten Untersetzungsgetriebe 13 ist das zumindest eine Seitengetriebe 12 zwischengeschaltet.

Das zumindest eine dem Presskolben 7 zugeordnete Untersetzungsgetriebe 13 ist abtriebsseitig mit einer Kurbelwelle 15 verbunden, auf der der Presskolben 7 gelagert ist, so dass der Presskolben 7 zwischen seinen Endlagen im Presskanal bewegbar ist.

Das zumindest eine dem Presskolben 7 zugeordnete Untersetzungsgetriebe 13 kann als Stirnradgetriebe oder Planetengetriebe ausgebildet sein.

Wie in den FIGs. 2 bis 3 dargestellt, kann der Antriebsstrang 3 ebenfalls zwei solcher Untersetzungsgetriebe 13 aufweisen, wobei jedes der dem Presskolben 7 zugeordneten Untersetzungsgetriebe 13 abtriebsseitig mit der Kurbelwelle 15 verbunden ist, die in einem solchen Fall zwischen beiden Untersetzungsgetrieben 13 angeordnet ist. Jeweils einem der dem Presskolben 7 zugeordneten Untersetzungsgetriebe 13 wird von jeweils einem der zwei Seitengetriebe 12, über den jeweiligen Abtrieb 14 des Seitengetriebes 12, Antriebsleistung zugeführt. Es ist jedoch genauso auch möglich, dass nur ein dem Presskolben 7 zugeordnetes Untersetzungsgetriebe 13 vorhanden ist. Der Antrieb erfolgt in einem solchen Fall nur mit einem Seitengetriebe 12 und die Kurbelwelle 15 ist mit einem Ende im Gehäuse der Quaderballenpresse 1 drehbeweglich gelagert.

Der Antriebsstrang 3 umfasst zudem zumindest ein Schwungrad 16. Das zumindest eine Schwungrad 16 ist dem zumindest einen Seitengetriebe 12 und dem zumindest einen dem Presskolben 7 zugeordneten Untersetzungsgetriebe 13 zwischengeschaltet. Das zumindest eine Schwungrad 16 kann dem Abtrieb 14 des zumindest einen Seitengetriebes 12 zugeordnet sein. Mit anderen Worten, das zumindest eine Schwungrad 16 bildet einen Teil des Abtriebs 14 des zumindest einen Seitengetriebes 12 aus. Das zumindest eine Schwungrad 16 kann beispielsweise integral mit dem Abtrieb 14 des zumindest einen Seitengetriebes 12 hergestellt sein, oder aber form-, kraft- und/oder stoffschlüssig mit dem Abtrieb 14 verbunden sein. Anders als im Stand der Technik ist das zumindest eine Schwungrad 16 somit nicht zwischen Drehmomenteneingangsanschluss und einer der ersten Leistungsverzweigung 10 entsprechenden Leistungsverzweigung angeordnet, sondern dem eigentlichen Presskolbenantrieb zugeordnet, genauer gesagt dem zumindest einen Seitengetriebe 12 und dem zumindest einen dem Presskolben 7 zugeordneten Untersetzungsgetriebe 13 zwischengeschaltet.

Wie in den FIGs. 2 bis 3 dargestellt, kann der Antriebsstrang 3 auch zwei solcher Schwungräder 16 aufweisen, wobei in einem solchen Fall je ein Schwungrad 16 je einem Abtrieb 14 je eines der zwei Seitengetriebe 12 zugeordnet ist.

Die erfindungsgemäße Ausgestaltung des Antriebsstrangs 3, insbesondere im Bereich zwischen der ersten Leistungsverzweigung 10 und dem Presskolben 7, erlaubt es, in besonders vorteilhafter Art und Weise ein für den Pressvorgang erforderliches hohes Drehmoment bei geringer Drehzahl bereitzustellen, hierbei jedoch eine hohe Betriebssicherheit und Zuverlässigkeit zu gewährleisten. Diese Ausgestaltung des Antriebsstrangs 3 zeichnet sich weiterhin durch ein geringes Gewicht und die vorteilhafte Bauraumausnutzung aus und ist modular, sodass der Antriebsstrang 3 bei einer Änderung der Dimensionierung der Arbeitsaggregate oder bei veränderten erforderlichen Antriebsleistungen einfach angepasst werden kann, ohne dass der Antriebsstrangs 3 grundlegend überarbeitet werden müsste.

Eine Kupplung zwischen Drehmomenteneingangsanschluss und erster Leistungsverzweigung 10 kann hierbei entfallen, so dass das zumindest eine Schwungrad 16 durchgehend angetrieben wird. Der Presskolben 7 kann, sobald das zumindest eine Schwungrad 16 seine Nenndrehzahl erreicht hat, zugeschaltet werden und mit der erforderlichen Antriebsleistung betrieben werden.

Unter einem hohen Drehmoment ist im Rahmen dieser Erfindung ein Drehmoment zu verstehen, dass erheblich höher ist als das am Drehmomenteneingangsanschluss von der landwirtschaftlichen Arbeitsmaschine bereitgestellte Drehmoment, vorzugsweise ungefähr um den Faktor 40 bis 50. Unter einer geringen Drehzahl ist eine Drehzahl zu verstehen, die erheblich geringer ist als die an der Antriebswelle 9 von der landwirtschaftlichen Arbeitsmaschine bereitgestellten Drehzahl, vorzugsweise ungefähr um den Faktor 20.

Weiterhin kann dem Schneidrotor 5 der Quaderballenpresse 1 ebenfalls ausgehend von der ersten Leistungsverzweigung 10 Antriebsleistung zugeführt werden. Das dem Presskolben 7 zugeordnete Untersetzungsgetriebe 13 und der Schneidrotor 5 sind demnach parallel zueinander an die erste Leistungsverzweigung 10 angeschlossen. Der Antriebsstrang 3 der Quaderballenpresse 1 umfasst in diesem Zusammenhang ein dem Schneidrotor 5 zugeordnetes Untersetzungsgetriebe 17. Der ersten Leistungsverzweigung 10 und dem Untersetzungsgetriebe 17, das dem Schneidrotor 5 zugeordnet ist, ist ein weiteres Getriebe 18 zwischengeschaltet, das entweder als Seitengetriebe oder als Winkelgetriebe ausgebildet ist.

Sofern das Getriebe 18 als Seitengetriebe ausgebildet ist, ist es, genau wie auch das zumindest eine der ersten Leistungsverzweigung 10 und dem zumindest einen dem Presskolben 7 zugeordneten Untersetzungsgetriebe 13 zwischengeschaltete Seitengetriebe 12, auf der Abtriebswelle 11 der ersten Leistungsverzweigung 10 angeordnet, vorzugsweise in einem Randbereich der Abtriebswelle 11. Das Seitengetriebe 18 kann wahlweise als Zugmittelgetriebe, vorzugsweise als Keilrippenriemengetriebe, oder aber als Stirnradgetriebe ausgebildet sein, wobei ein Abtrieb des Seitengetriebes 18 das dem Schneidrotor 5 zugeordnete Untersetzungsgetriebe 17 antreibt.

Sofern das Getriebe 18 als Winkelgetriebe ausgebildet ist, ist das Winkelgetriebe eine Kegelradstufe mit zwei über eine Gelenkwelle miteinander verbundenen Kegelrädern, wobei ein Kegelrad einen Teil der ersten Leistungsverzweigung 10 ausbildet, demnach über ein Kegelrad der ersten Leistungsverzweigung 10 angetrieben wird, und das andere Kegelrad das dem Schneidrotor 5 zugeordnete Untersetzungsgetriebe 17 antreibt.

Das Übersetzungsverhältnis des Getriebes 18 beträgt, unabhängig von der konkreten Ausgestaltung als Seitengetriebe oder Winkelgetriebe, i = 1. Alternativ hierzu ist es aber durchaus auch vorstellbar, dass das Übersetzungsverhältnis des Seitengetriebes oder Winkelgetriebes i # 1 betragen kann.

FIG. 2 und FIG. 3 zeigen jeweils verschiedene Ausführungsformen des erfindungsgemäßen Antriebsstrangs 3 der erfindungsgemäßen Quaderballenpresse 1. Beide Antriebsstränge 3 unterscheiden sich lediglich dahingehend voneinander, dass das dem Schneidrotor 5 zugeordnete und von dem Getriebe 18 angetriebene Untersetzungsgetriebe 17 unterschiedlich ausgestaltet ist.

In der in FIG. 2 abgebildeten Ausführungsform ist das dem Schneidrotor 5 zugeordnete Untersetzungsgetriebe 17 als Stirnradgetriebe ausgebildet. Ein solches Stirnradgetriebe 17 umfasst eine Mehrzahl von Getriebestufen auf, um die von dem Getriebe 18 bereitgestellte Antriebsleistung auf eine für den Betrieb des Schneidrotors 5 erforderliche Antriebsleistung zu wandeln, wobei der Abtrieb des Stirnradgetriebes 17 unmittelbar den Schneidrotor 5 antreibt.

In der in FIG. 3 gezeigten Ausbildungsform des Antriebsstrangs 3 ist das dem Schneidrotor 5 zugeordnete Untersetzungsgetriebe 17 ein einstufiges Planetengetriebe. Der Abtrieb des Getriebes 18 treibt eine Welle an, auf der drehfest ein Sonnenrad des Planetengetriebes 17 gelagert ist. Ein Hohlrad des Planetengetriebes 17 ist drehfest mit einem Gehäuse des Planetengetriebes 17 verbunden, so dass die über das Sonnenrad den Planeten zugeführte Antriebsleistung an die Planetenträger übertragen wird, die mit dem Schneidrotor 5 verbunden sind und diesen antreiben.

Die erfindungsgemäße Ausgestaltung des Antriebsstrangs 3, insbesondere im Bereich zwischen der ersten Leistungsverzweigung 10 und dem Schneidrotor 5, erlaubt es, in besonders vorteilhafter Art und Weise ein für das Zerkleinern des Ernteguts erforderliches hohes Drehmoment bei geringer Drehzahl bereitzustellen. Unter einem hohen Drehmoment ist in diesem Zusammenhang ein Drehmoment zu verstehen, dass erheblich höher ist als das am Drehmomenteneingangsanschluss von der landwirtschaftlichen Arbeitsmaschine bereitgestellte Drehmoment, jedoch geringer als das für den Pressvorgang erforderliche Drehmoment, vorzugsweise ungefähr um den Faktor 10 höher als das am Drehmomenteneingangsanschluss von der landwirtschaftlichen Arbeitsmaschine bereitgestellte Drehmoment. Unter einer geringen Drehzahl ist eine Drehzahl zu verstehen, die erheblich geringer ist als die an der Antriebswelle 9 von der landwirtschaftlichen Arbeitsmaschine bereitgestellten Drehzahl, jedoch höher als die Drehzahl mit der der Presskolben 7 angetrieben wird, vorzugsweise ungefähr um den Faktor 8 geringer als die von der landwirtschaftlichen Arbeitsmaschine an der Antriebswelle 9 bereitgestellte Drehzahl.

Im Rahmen der vorliegenden Erfindung kann es auch vorgesehen sein, dass ausgehend von dem Untersetzungsgetriebe 17, das dem Schneidrotor 5 zugeordnet ist, oder dem Abtrieb des Getriebes 18 die Aufnahmevorrichtung 4 der Quaderballenpresse 1, insbesondere einzelne Module der Aufnahmevorrichtung 4, angetrieben werden. Hierzu können weitere Getriebe bzw. Getriebestufen vorhanden sein, die mittelbar oder unmittelbar mit dem Untersetzungsgetriebe 17 oder dem Getriebe 18 zusammenwirken.

Der Antriebsstrang 3 der Quaderballenpresse 1 kann eine zweite Leistungsverzweigung 19 umfassen, die dem zumindest einen Seitengetriebe 12 nachgeschaltet ist. Mittels der zweiten Leistungsverzweigung 19 kann zumindest ein in den FIGs. 2 und 3 nicht dargestelltes, nur angedeutetes weiteres Arbeitsaggregat, beispielsweise ein Raffer 6 oder ein Knoter 8, parallel zu dem Presskolben 7 und dem Schneidrotor 5 angetrieben werden.

Die zweite Leistungsverzweigung 19 ist vorzugsweise dem zumindest einen dem Presskolben 7 zugeordneten Untersetzungsgetriebe 13 zugeordnet bzw. bildet eine Komponente des Untersetzungsgetriebes 13 aus. Im Falle von zwei dem Presskolben 7 zugeordneten Untersetzungsgetrieben 13, ist die zweite Leistungsverzweigung 19 nur einem der Untersetzungsgetriebe 13 zugeordnet. Wie in den FIG. 2 und 3 schematisch angegeben umfasst die zweite Leistungsverzweigung 19 vorzugsweise ein mehrstufiges Stirnradgetriebe. Hierdurch kann die von abgezweigte Antriebsleistung bereits unter Berücksichtigung einer für den Betrieb des weiteren Arbeitsaggregats erforderlichen Antriebsleistung (vor-)gewandelt werden.

Damit nicht nur ein weiteres Arbeitsaggregat, sondern zwei weitere in den FIGs. 2 und 3 nicht dargestellte Arbeitsaggregate, beispielsweise ein Raffer 6 und ein Knoter 8, parallel zu dem Schneidrotor 5 und dem Presskolben 7 von dem Antriebsstrang 3 mit Antriebsleistung versorgt werden können, kann der Antriebsstrang 3 eine dritte Leistungsverzweigung 20 aufweisen. Diese dritte Leistungsverzweigung 20 ist der zweiten Leistungsverzweigung 19 nachgeschaltet und umfasst vorzugsweise eine Kegelradstufe. Auch diese dritte Leistungsverzweigung 20 kann die abgezweigte Antriebsleistung bereits unter Berücksichtigung einer für den Betrieb des/der weiteren Arbeitsaggregats/e erforderlichen Antriebsleistung (vor-)gewandelt werden.

Jedes weitere an den Antriebsstrang 3 angeschlossene Arbeitsaggregat 4, 6, 8 der Quaderballenpresse 1 kann, genau wie auch der Schneidrotor 5 und der Presskolben 7, ein in den FIGs. nicht dargestelltes Getriebe aufweisen mittels dem die für den Betrieb des jeweiligen Arbeitsaggregats 4, 6, 8 erforderliche Antriebsleistung bereitgestellt werden kann.

Jeder Getriebeeinrichtung des Antriebsstrangs 3 kann eine Einrichtung zur Lasterkennung zugeordnet sein, die mit einer in den FIGs. 1 bis 3 nicht dargestellten Steuerungseinrichtung der Quaderballenpresse 1 und/oder der landwirtschaftlichen Arbeitsmaschine in datenübertragender Art und Weise verbindbar ist. Die mittels der Einrichtungen zur Lasterkennung detektierten Daten können von der/den Steuerungseinrichtungen weiterverarbeitet werden und für den Betrieb, insbesondere einen vollautomatischen Betrieb, der Quaderballenpresse 1 genutzt werden.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

1 Quaderballenpresse
2 Fahrgestell
3 Antriebsstrang
4 Aufnahmevorrichtung
5 Schneidrotor
6 Raffer
7 Presskolben
8 Knoter
9 Antriebswelle
10 Erste Leistungsverzweigung
11 Abtriebswelle
12 Zugmittelgetriebe
13 Untersetzungsgetriebe (Presskolben)
14 Abtrieb des Zugmittelgetriebes
15 Kurbelwelle (Presskolben)
16 Schwungrad
17 Untersetzungsgetriebe (Schneidrotor)
18 Seitengetriebe oder Winkelgetriebe
19 Zweite Leistungsverzweigung
20 Dritte Leistungsverzweigung

## Patentansprüche

1. Quaderballenpresse (1), die zumindest einen in einem Presskanal zwischen Endlagen beweglich angeordneten Presskolben (7) und einen Schneidrotor (5) umfasst, wobei die Quaderballenpresse (1) einen Antriebsstrang (3) umfasst, der dazu ausgebildet ist, zumindest den Presskolben (7) und den Schneidrotor (5) gemeinsam anzutreiben, wobei der Antriebsstrang (3) einen Drehmomenteneingangsanschluss umfasst mittels dem ein Drehmoment dem Antriebsstrang (3) zuführbar ist, wobei der Antriebsstrang (3) eine erste Leistungsverzweigung (10), vorzugsweise eine Kegelradstufe, umfasst, die mit dem Drehmomenteneingangsanschluss verbunden ist, wobei der Antriebsstrang (3) zumindest ein dem Presskolben (7) zugeordnetes Untersetzungsgetriebe (13) umfasst, wobei das dem Presskolben (7) zugeordnete Untersetzungsgetriebe (13) und der Schneidrotor (5) parallel zueinander an die erste Leistungsverzweigung (10) angeschlossen sind,
**dadurch gekennzeichnet, dass**
der ersten Leistungsverzweigung (10) und dem zumindest einen dem Presskolben (7) zugeordneten Untersetzungsgetriebe (13) zumindest ein Seitengetriebe (12) zwischengeschaltet ist und dem zumindest einen dem Presskolben (7) zugeordneten Untersetzungsgetriebe (13) und dem zumindest einen Seitengetriebe (12) zumindest ein Schwungrad (16) zwischengeschaltet ist.

2. Quaderballenpresse (1) nach Anspruch 1, **dadurch gekennzeichnet, dass** ein Abtrieb (14) des zumindest einen Seitengetriebes (12) das zumindest eine Schwungrad (16) umfasst.

3. Quaderballenpresse (1) nach Anspruch 1 oder 2, **dadurch gekennzeichnet, dass** das Übersetzungsverhältnis des zumindest einen Seitengetriebes (12) i < 1 beträgt.

4. Quaderballenpresse (1) nach einem der Ansprüche 1 bis 3, **dadurch gekennzeichnet, dass** das zumindest eine Seitengetriebe (12) ein Zugmittelgetriebe, vorzugsweise ein Keilriemengetriebe, ist.

5. Quaderballenpresse (1) nach einem der Ansprüche 1 bis 4, **dadurch gekennzeichnet, dass** der Antriebsstrang (3) genau zwei dem Presskolben (7) zugeordnete Untersetzungsgetriebe (13) und genau zwei der ersten Leistungsverzweigung (10) und den dem Presskolben (7) zugeordneten Untersetzungsgetrieben (13) zwischengeschaltete Seitengetriebe (12) umfasst.

6. Quaderballenpresse (1) nach Anspruch 5, **dadurch gekennzeichnet, dass** der Antriebsstrang (3) zwei Schwungräder (16) umfasst, wobei ein Schwungrad (16) jeweils einem dem Presskolben (7) zugeordneten Untersetzungsgetriebe (13) und einem zugehörigen Seitengetriebe (12) zwischengeschaltet ist.

7. Quaderballenpresse (1) nach Anspruch 6, **dadurch gekennzeichnet, dass** ein Abtrieb (14) jeweils eines Seitengetriebes (12) jeweils ein Schwungrad (16) umfasst.

8. Quaderballenpresse (1) nach einem der Ansprüche 1 bis 7, **dadurch gekennzeichnet, dass** der Antriebsstrang (3) ein dem Schneidrotor (5) zugeordnetes Untersetzungsgetriebe (17) umfasst, wobei der ersten Leistungsverzweigung (10) und dem dem Schneidrotor (5) zugeordneten Untersetzungsgetriebe (17) ein Seitengetriebe oder ein Winkelgetriebe (18) zwischengeschaltet ist.

9. Quaderballenpresse (1) nach Anspruch 8, **dadurch gekennzeichnet, dass** das Übersetzungsverhältnis des Seitengetriebes oder Winkelgetriebes (18) i = 1 beträgt.

10. Quaderballenpresse (1) nach Anspruch 8 oder 9, **dadurch gekennzeichnet, dass** das Seitengetriebe (18) ein Zugmittelgetriebe, vorzugsweise ein Keilriemengetriebe, oder ein Stirnradgetriebe ist, oder das Winkelgetriebe (18) eine Kegelradstufe ist.

11. Quaderballenpresse (1) nach einem der Ansprüche 8 bis 10, **dadurch gekennzeichnet, dass** das dem Schneidrotor (5) zugeordnete Untersetzungsgetriebe (17) ein mehrstufiges Stirnradgetriebe ist.

12. Quaderballenpresse (1) nach Anspruch 8 bis 10, **dadurch gekennzeichnet, dass** das dem Schneidrotor (5) zugeordnete Untersetzungsgetriebe (17) ein einstufiges Planetengetriebe ist, wobei ein Sonnenrad des Planetengetriebes (17) mittels des Seitengetriebes oder Winkelgetriebes (18) antreibbar ist, wobei Planetenträger des Planetengetriebes (17) mit dem Schneidrotor (5) verbunden sind, wobei das Planetengetriebe (17) zum Abtrieb über die Planetenträger ausgebildet ist.

13. Quaderballenpresse (1) nach einem der Ansprüche 1 bis 12, **dadurch gekennzeichnet, dass** dem zumindest einen Seitengetriebe (12) eine zweite Leistungsverzweigung (19) nachgeschaltet ist, die dazu ausgebildet ist, zumindest ein weiteres Arbeitsaggregat (6, 8) der Quaderballenpresse (1) parallel zu dem Presskolben (7) und dem Schneidrotor (5) zu betreiben, wobei, vorzugsweise, die zweite Leistungsverzweigung (19) ein mehrstufiges Stirnradgetriebe umfasst.

14. Quaderballenpresse (1) nach Anspruch 13, **dadurch gekennzeichnet, dass** die zweite Leistungsverzweigung (19) dem zumindest einen dem Presskolben (7) zugeordneten Untersetzungsgetriebe (13) zugeordnet ist, vorzugsweise einem der zwei dem Presskolben (7) zugeordneten Untersetzungsgetriebe (13).

15. Quaderballenpresse (1) nach Anspruch 13 oder 14, **dadurch gekennzeichnet, dass** der zweiten Leistungsverzweigung (19) eine dritte Leistungsverzweigung (20) nachgeschaltet ist, die dazu ausgebildet ist, zwei weitere Arbeitsaggregate (6, 8) der Quaderballenpresse (1) parallel zu dem Presskolben (7) und dem Schneidrotor (5) zu betreiben, wobei, vorzugsweise, die dritte Leistungsverzweigung (20) eine Kegelradstufe umfasst.

## Claims

1. A square baler (1) which comprises at least one baler ram (7), which is movably disposed between end positions in a pressing channel, and a cutting rotor (5), wherein the square baler (1) comprises a drive train (3) which is configured to drive at least the baler ram (7) and the cutting rotor (5) together, wherein the drive train (3) comprises a torque input connection by means of which a torque can be supplied to the drive train (3), wherein the drive train (3) comprises a first power distributor (10), preferably a bevel gear stage, which is connected to the torque input connection, wherein the drive train (3) comprises at least one reduction gear (13) associated with the baler ram (7), wherein the reduction gear (13) associated with the baler ram (7) and the cutting rotor (5) are connected to the first power distributor (10) in parallel with each other,
**characterized in that**
at least one side gear (12) is connected between the first power distributor (10) and the at least one reduction gear (13) associated with the baler ram (7) and at least one flywheel (16) is connected between the at least one reduction gear (13) associated with the baler ram (7) and the at least one side gear (12).

2. The square baler (1) according to claim 1, **characterized in that** an output (14) of the at least one side gear (12) comprises the at least one flywheel (16).

3. The square baler (1) according to claim 1 or claim 2, **characterized in that** the transmission ratio of the at least one side gear (12) is i < 1.

4. The square baler (1) according to one of claims 1 to 3, **characterized in that** the at least one side gear (12) is a traction gear, preferably a V-belt gear.

5. The square baler (1) according to one of claims 1 to 4, **characterized in that** the drive train (3) comprises exactly two reduction gears (13) associated with the baler ram (7) and exactly two side gears (12) connected between the first power distributor (10) and the reduction gear (13) associated with the baler ram (7).

6. The square baler (1) according to claim 5, **characterized in that** the drive train (3) comprises two flywheels (16), wherein a flywheel (16) is connected between a respective reduction gear (13) associated with the baler ram (7) and an associated side gear (12).

7. The square baler (1) according to claim 6, **characterized in that** an output (14) of the respective side gear (12) comprises a respective flywheel (16).

8. The square baler (1) according to one of claims 1 to 7, **characterized in that** the drive train (3) comprises a reduction gear (17) associated with the cutting rotor (5), wherein a side gear or an angular gear (18) is connected between the first power distributor (10) and the reduction gear (17) associated with the cutting rotor (5).

9. The square baler (1) according to claim 8, **characterized in that** the transmission ratio of the side gear or the angular gear (18) is i = 1.

10. The square baler (1) according to claim 8 or claim 9, **characterized in that** the side gear (18) is a traction gear, preferably a V-belt gear, or a spur gear, or the angular gear (18) is a bevel gear stage.

11. The square baler (1) according to one of claims 8 to 10, **characterized in that** the reduction gear (17) associated with the cutting rotor (5) is a multi-stage spur gear.

12. The square baler (1) according to claims 8 to 10, **characterized in that** the reduction gear (17) associated with the cutting rotor (5) is a single-stage planetary gear, wherein a sun gear of the planetary gear (17) can be driven by means of the side gear or angular gear (18), wherein planetary carriers of the planetary gear (17) are connected to the cutting rotor (5), wherein the planetary gear (17) is configured for output via the planetary carriers.

13. The square baler (1) according to one of claims 1 to 12, **characterized in that** a second power distributor (19) is connected downstream of the at least one side gear (12) and is configured to operate at least one further working assembly (6, 8) of the square baler (1) in parallel with the baler ram (7) and the cutting rotor (5), wherein preferably, the second power distributor (19) comprises a multi-stage spur gear.

14. The square baler (1) according to claim 13, **characterized in that** the second power distributor (19) is associated with the at least one reduction gear (13) associated with the baler ram (7), preferably one of the two reduction gears (13) associated with the baler ram (7).

15. The square baler (1) according to claim 13 or claim 14, **characterized in that** a third power distributor (20) is connected downstream of the second power distributor (19) and is configured to operate two further working assemblies (6, 8) of the square baler (1) in parallel with the baler ram (7) and the cutting rotor (5), wherein preferably, the third power distributor (20) comprises a bevel gear stage.

## Revendications

1. Presse à balles parallélépipédiques (1) qui comprend au moins un piston de pressage (7), disposé de façon mobile entre des positions extrêmes dans un canal de pressage, et un rotor de coupe (5), la presse à balles parallélépipédiques (1) comportant une chaîne de transmission (3) qui est agencée pour entraîner conjointement au moins le piston de pressage (7) et le rotor de coupe (5), la chaîne de transmission (3) comportant un raccord d'entrée de couple qui permet d'appliquer un couple à la chaîne de transmission (3), la chaîne de transmission (3) comprenant un premier élément de répartition de puissance (10), de préférence un étage à roue conique, qui est relié au raccord d'entrée de couple, la chaîne de transmission (3) comprenant au moins un mécanisme réducteur (13) associé au piston de pressage (7), le réducteur (13) associé au piston de pressage (7) et le rotor de coupe (5) étant raccordés au premier élément de répartition de puissance (10), parallèlement l'un à l'autre,
**caractérisée en ce que**
au moins une transmission latérale (12) est intercalée entre le premier élément de répartition de puissance (10) et le réducteur (13), au nombre d'au moins un, associé au piston de pressage (7), et au moins un volant d'inertie (16) est intercalé entre le réducteur (13), au nombre d'au moins un, associé au piston de pressage (7), et la transmission latérale (12), au nombre d'au moins une.

2. Presse à balles parallélépipédiques (1) selon la revendication 1, **caractérisée en ce qu'**une sortie d'entraînement (14) de la transmission latérale (12), au nombre d'au moins une, comprend le volant d'inertie (16), au nombre d'au moins un.

3. Presse à balles parallélépipédiques (1) selon la revendication 1 ou 2, **caractérisée en ce que** le rapport de réduction de la transmission latérale (12), au nombre d'au moins une, est i < 1.

4. Presse à balles parallélépipédiques (1) selon l'une des revendications 1 à 3, **caractérisée en ce que** la transmission latérale (12), au nombre d'au moins une, est un mécanisme à élément de traction, de préférence un mécanisme à courroie trapézoïdale.

5. Presse à balles parallélépipédiques (1) selon l'une des revendications 1 à 4, **caractérisée en ce que** la chaîne de transmission (3) comprend exactement deux réducteurs (13) associés au piston de pressage (7), et exactement deux transmissions latérales (12) intercalées entre le premier élément de répartition de puissance (10) et les réducteurs (13) associés au piston de pressage (7).

6. Presse à balles parallélépipédiques (1) selon la revendication 5, **caractérisée en ce que** la chaîne de transmission (3) comprend deux volants d'inertie (16), un volant d'inertie (16) étant respectivement intercalé entre un réducteur (13), associé au piston de pressage (7), et une transmission latérale (12) associée.

7. Presse à balles parallélépipédiques (1) selon la revendication 6, **caractérisée en ce qu'**une sortie d'entraînement (14) respective d'une transmission latérale (12) comprend respectivement un volant d'inertie (16).

8. Presse à balles parallélépipédiques (1) selon l'une des revendications 1 à 7, **caractérisée en ce que** la chaîne de transmission (3) comprend un réducteur (17) associé au rotor de coupe (5), une transmission latérale ou un engrenage angulaire (18) étant intercalé(e) entre le premier élément de répartition de puissance (10) et le réducteur (17) associé au rotor de coupe (5).

9. Presse à balles parallélépipédiques (1) selon la revendication 8, **caractérisée en ce que** le rapport de transmission de la transmission latérale ou de l'engrenage angulaire (18) est i = 1.

10. Presse à balles parallélépipédiques (1) selon la revendication 8 ou 9, **caractérisée en ce que** la transmission latérale (18) est un mécanisme à élément de traction, de préférence un mécanisme à courroie trapézoïdale, ou un engrenage droit, ou que l'engrenage angulaire (18) est un étage à roues coniques.

11. Presse à balles parallélépipédiques (1) selon l'une des revendications 1 à 10, **caractérisée en ce que** le réducteur (17) associé au rotor de coupe (5) est un engrenage droit à plusieurs étages.

12. Presse à balles parallélépipédiques (1) selon les revendications 8 à 10, **caractérisée en ce que** le réducteur (17) associé au rotor de coupe (5) est un engrenage planétaire mono-étagé, une roue solaire de l'engrenage planétaire (17) pouvant être entraînée au moyen de la transmission latérale ou de l'engrenage angulaire (18), des porte-satellites de l'engrenage planétaire (17) étant reliés au rotor de coupe (5), l'engrenage planétaire (17) étant réalisé en vue de l'entraînement de sortie par l'intermédiaire des porte-satellites.

13. Presse à balles parallélépipédiques (1) selon l'une des revendications 1 à 12, **caractérisée en ce qu'**il est prévu, à la suite de la transmission latérale (12), au nombre d'au moins une, un deuxième élément de répartition de puissance (19) qui est agencé pour faire fonctionner au moins une unité de travail (6, 8) supplémentaire de la presse à balles parallélépipédiques (1), parallèlement au piston de pressage (7) et au rotor de coupe (5), le deuxième élément de répartition de puissance (19) comprenant de préférence un engrenage droit à plusieurs étages.

14. Presse à balles parallélépipédiques (1) selon la revendication 13, **caractérisée en ce que** le deuxième élément de répartition de puissance (19) est associé au réducteur (13), au nombre d'au moins un, associé au piston de pressage (7), de préférence à l'un des deux réducteurs (13) associés au piston de pressage (7).

15. Presse à balles parallélépipédiques (1) selon la revendication 13 ou 14, **caractérisée en ce qu'**il est prévu, à la suite du deuxième élément de répartition de puissance (19), un troisième élément de répartition de puissance (20) qui est agencé pour faire fonctionner deux unités de travail (6, 8) supplémentaires de la presse à balles parallèlement (1), parallèlement au piston de pressage (7) et au rotor de coupe (5), le troisième élément de répartition de puissance (20) comprenant de préférence un étage à roues coniques.
